(19) Europäisches Patentamt
European Patent Office
Office européen des brevets

(11) **EP 4 611 064 A1**

(12) **EUROPEAN PATENT APPLICATION**
published in accordance with Art. 153(4) EPC

(43) Date of publication:
03.09.2025 Bulletin 2025/36

(51) International Patent Classification (IPC):
$H01M\ 4/36^{(2006.01)}$ \qquad $H01M\ 10/0525^{(2010.01)}$

(21) Application number: 24773778.6

(22) Date of filing: 17.01.2024

(52) Cooperative Patent Classification (CPC):
H01M 4/1315; H01M 4/136; H01M 4/36;
H01M 4/485; H01M 4/505; H01M 4/525;
H01M 4/58; H01M 10/0525; Y02E 60/10

(86) International application number:
PCT/CN2024/072716

(87) International publication number:
WO 2024/193209 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.03.2023 CN 202310279207

(71) Applicant: Contemporary Amperex Technology
(Hong Kong) Limited
Hong Kong (HK)

(72) Inventors:
• PAN, Jianfu
Ningde, Fujian 352100 (CN)

• XU, Xiaofu
Ningde, Fujian 352100 (CN)
• SHANG, Yibo
Ningde, Fujian 352100 (CN)
• QIN, Yiming
Ningde, Fujian 352100 (CN)
• ZHANG, Xinyu
Ningde, Fujian 352100 (CN)
• PEI, Renjie
Ningde, Fujian 352100 (CN)
• LIU, Qian
Ningde, Fujian 352100 (CN)
• YE, Yonghuang
Ningde, Fujian 352100 (CN)

(74) Representative: Kraus & Lederer PartGmbB
Thomas-Wimmer-Ring 15
80539 München (DE)

(54) **POSITIVE ELECTRODE ACTIVE MATERIAL, POSITIVE POLE PIECE, SECONDARY BATTERY, AND ELECTRICAL APPARATUS**

(57) Embodiments of this application relate to a positive electrode active material, a positive electrode plate, a secondary battery, and an electric device. The positive electrode active material includes a first active material and a second active material. The first active material includes a compound having a molecular formula of $Li_{1+x}Fe_{1-y}A_yP_{1-z}Q_zO_4$ and a modified compound thereof. The second active material includes a compound having a molecular formula of $Li_hNi_jCo_kM1_dM2_eO_fR_g$ and a modified compound thereof. The embodiments of this application can improve capacity utilization and cycle performance of a secondary battery.

FIG. 1

**Description**

**CROSS-REFERENCE TO RELATED APPLICATIONS**

This application claims priority to Chinese Patent Application No. 202310279207.6, entitled "POSITIVE ELECTRODE ACTIVE MATERIAL, POSITIVE ELECTRODE PLATE, SECONDARY BATTERY, AND ELECTRIC DEVICE" filed on March 21, 2023, which is incorporated by reference in its entirety.

**TECHNICAL FIELD**

This application relates to the field of battery technologies, and more specifically, to a positive electrode active material, a positive electrode plate, a secondary battery, and an electric device.

**BACKGROUND**

Secondary batteries are wildly used due to their advantages such as reliable working performance, no pollution, and no memory effect. For example, with the increasing attention to environmental protection issues and the increasing popularity of new energy vehicles, the demand for power secondary batteries will show explosive growth.

With the development of the new energy field, requirements on performance of batteries are gradually increasing. How to further improve capacity utilization and cycle performance of a secondary battery is an urgent problem to be resolved nowadays.

**SUMMARY**

Embodiments of this application provide a positive electrode active material, a positive electrode plate, a secondary battery, and an electric device. The embodiments of this application can improve capacity utilization and cycle performance of a secondary battery.

According to a first aspect, an embodiment of this application provides a positive electrode active material. The positive electrode active material includes a first active material and a second active material. The first active material includes a compound having a molecular formula of $Li_{1+x}Fe_{1-y}A_yP_{1-z}Q_zO_4$ and a modified compound thereof, where $0 \leq x < 1$, $0 \leq y \leq 0.8$, $0 \leq z \leq 0.1$, A includes one or more of Zn, Al, Na, K, Mg, Mo, W, Ti, V, Cr, Mn, Ni, Co, Ga, Sn, Sb, Nb, and Ge, and Q includes one or more of B, Si, N, S, F, Cl, and Br. The second active material includes a compound having a molecular formula of $Li_hNi_jCo_kM1_dM2_eO_fR_g$ and a modified compound thereof, where $0.75 \leq h \leq 1.2$, $0.38 < j < 1$, $0.03 < k < 0.50$, $0 < d < 1$, $0 \leq e \leq 0.2$, $1 \leq f \leq 2.5$, $0 \leq g \leq 1$, $f+g \leq 3$, M1 includes one or two of Mn or Al, M2 includes one or more of a group consisting of Zr, Zn, Cu, Cr, Mg, Fe, V, Ti, Sr, Sb, Ba, Y, W, and Nb, and R includes one or more of a group consisting of N, F, S, and Cl.

Therefore, in this embodiment of this application, by particularly selecting polyanionic materials, when the first active material and the second active material satisfy the ranges of the foregoing molecular formulas, the first active material and the second active material have close voltage plateaus, which is conducive to jointly utilizing capacities of the two and improving cycle performance of a secondary battery.

In some embodiments, a positive electrode plate including the positive electrode active material per unit area and a lithium plate per unit area are formed into a button-type half-cell, and the button-type half-cell is charged at a rate of 0.1 C, to obtain a capacity-voltage derivative curve, where the capacity-voltage derivative curve includes a first peak value $\alpha$ and a second peak value $\beta$, where a unit of the first peak value $\alpha$ is V, and a horizontal coordinate corresponding to the first peak value $\alpha$ is $v_1$; and a unit of the second peak value $\beta$ is V, and a horizontal coordinate corresponding to the second peak value $\beta$ is $v_2$, where $\alpha$-$\beta \leq 0.25$, and $v_2 < v_1$; and optionally, $3.5 < v_1 < 4.0$; and/or $3.3 < v_2 < 3.6$.

Therefore, when the foregoing ranges are satisfied in this embodiment of this application, capacity utilization and the cycle performance of the secondary battery can be further improved.

In some embodiments, a positive electrode plate including the first active material per unit area and a lithium plate per unit area are formed into a button-type half-cell, and the button-type half-cell is charged at a rate of 0.1 C, to obtain a first relationship curve between a state of charge (SOC) and an open circuit voltage (OCV) corresponding to the SOC, where a voltage plateau at 0 to 10% SOC in the first relationship curve is denoted as m, and a unit of the voltage plateau is V; and a positive electrode plate including the second active material per unit area and a lithium plate per unit area are formed into a button-type half-cell, and the button-type half-cell is charged at a rate of 0.1 C, to obtain a second relationship curve between an SOC and an OCV corresponding to the SOC, where a voltage plateau at 0 to 10% SOC in the second relationship curve is denoted as n, and a unit of the voltage plateau is V, where m-n $\leq$ 0.15.

Therefore, when the foregoing ranges are satisfied in this embodiment of this application, capacity utilization and the cycle performance of the secondary battery can be further improved.

In some embodiments, the first active material satisfies at least one of the following conditions: (1) $0 \leq x \leq 0.3$; and

(2) $0 \leq y \leq 0.7$. Therefore, when the foregoing ranges are satisfied in this embodiment of this application, capacity utilization and the cycle performance of the secondary battery can be further improved.

In some embodiments, the first active material satisfies at least one of the following conditions: (I) A includes one or more of Ti, V, Ni, Co, and Mg; and (II) Q includes one or more of B, Si, N, and S.

Therefore, when the foregoing ranges are satisfied in this embodiment of this application, capacity utilization and the cycle performance of the secondary battery can be further improved.

In some embodiments, the first active material includes one or more of $LiMn_{0.5}Fe_{0.5}PO_4$, $LiMn_{0.6}Fe_{0.4}PO_4$, $LiMn_{0.7}Fe_{0.3}PO_4$, and $LiFePO_4$.

In some embodiments, the second active material satisfies at least one of the following conditions: (a) $0.50 \leq j < 1$; and optionally, $0.50 \leq j \leq 0.95$; and (b) M2 includes one or more of Mg, Ti, Ba, and Nb. Therefore, when the foregoing ranges are satisfied in this embodiment of this application, capacity utilization and the cycle performance of the secondary battery can be further improved.

In some embodiments, the second active material includes one or more of $LiNi_{0.50}Co_{0.20}Mn_{0.30}O_2$, $LiNi_{0.70}Co_{0.20}Mn_{0.10}O_2$, $LiNi_{0.50}Co_{0.30}Mn_{0.20}O_2$, $LiNi_{0.60}Co_{0.20}Mn_{0.20}O_2$, $LiNi_{0.80}Co_{0.10}Mn_{0.10}O_2$, and $LiNi_{0.90}Co_{0.05}Mn_{0.05}O_2$.

In some embodiments, a mass percentage of the first active material based on a mass of the positive electrode active material is A%; and a mass percentage of the second active material based on the mass of the positive electrode active material is B%, where the positive electrode active material satisfies: $1.5 \leq A/B \leq 9.0$, and optionally, $2.3 \leq A/B \leq 4.0$; and further optionally, $60 \leq A \leq 90$, and still further optionally, $70 \leq A \leq 80$; and/or $10 \leq B \leq 40$, and still further optionally, $20 \leq B \leq 30$. Therefore, when the foregoing ranges are satisfied in this embodiment of this application, capacity utilization and the cycle performance of the secondary battery can be further improved.

In some embodiments, the first active material includes one or two of monocrystalline particles and quasi-monocrystalline particles; and/or the second active material includes one or more of monocrystalline particles, quasi-monocrystalline particles, and polycrystalline particles, and optionally, the second active material includes polycrystalline particles.

According to a second aspect, an embodiment of this application provides a positive electrode plate, including a positive electrode current collector and a positive electrode film layer arranged on at least one surface of the positive electrode current collector, where the positive electrode film layer includes the positive electrode active material according to any embodiment of the first aspect of this application.

According to a third aspect, an embodiment of this application provides a secondary battery, including the positive electrode plate according to any embodiment of the second aspect of this application.

According to a fourth aspect, an embodiment of this application provides an electric device, including the secondary battery according to any embodiment of the third aspect of this application.

## BRIEF DESCRIPTION OF THE DRAWINGS

To describe the technical solutions of the embodiments of this application more clearly, the accompanying drawings required in the embodiments of this application are briefly described. Apparently, the accompanying drawings described below are only some embodiments of this application. For a person of ordinary skill in the art, other accompanying drawings can be further obtained based on the accompanying drawings without creative efforts.

FIG. 1 is a schematic diagram of an embodiment of a secondary battery according to this application;
FIG. 2 is a schematic exploded view of an embodiment of the secondary battery in FIG. 1.
FIG. 3 is a schematic diagram of an embodiment of a battery module according to this application;
FIG. 4 is a schematic diagram of an embodiment of a battery pack according to this application;
FIG. 5 is a schematic exploded view of an embodiment of the battery pack shown in FIG. 4;
FIG. 6 is a schematic diagram of an embodiment of an electric device using a secondary battery according to this application as a power supply; and
FIG. 7 shows a capacity-voltage derivative curve of a secondary battery according to Example 6 of this application.

The accompanying drawings are not drawn to actual scale.
Descriptions of reference signs are as follows:

1: battery pack; 2: upper box body; 3: lower box body; 4: battery module;
5: secondary battery; 51: case; 52: electrode assembly;
53: cover plate; and
6: electric device.

**DETAILED DESCRIPTION**

The following specifically discloses embodiments of a positive electrode active material, a positive electrode plate, a secondary battery, and an electric device, in this application, with proper reference to accompanying drawings. However, there may be situations where unnecessary detailed explanations may be omitted. For example, there are situations where detailed explanations of well-known matters are omitted and repeated explanations of the same structure are actually provided. This is to avoid unnecessary redundancy in the subsequent descriptions and to facilitate understanding by a person skilled in the art. In addition, the accompanying drawings and the following description are provided for a person skilled in the art to fully understand this application and are not intended to limit the subject matter recorded in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all expected: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer$\geq$2, it is equivalent to disclosing that the parameter is, for example, an integer of 2, 3, 4, 5, 6, 7, 8, 9, 10, 11, 12, or the like.

Unless otherwise specified, all the embodiments and optional embodiments of this application can be combined with each other to form new technical solutions.

Unless otherwise specified, all technical features and optional technical features of this application can be combined to form new technical solutions.

Unless otherwise specified, all the steps in this application can be performed in the order described or in a random order, and preferably in the order described. For example, the phrase "the method includes step (a) and step (b)" indicates that the method may include step (a) and step (b) performed sequentially, or the method may include step (b) and step (a) performed sequentially. For example, reference to "the method may further include step (c)" indicates that step (c) may be added to the method in any order, for example, the method may include step (a), step (b), and step (c), or may include step (a), step (c), and step (b), or may include step (c), step (a), and step (b), and the like.

Unless otherwise specified, the terms "include" and " contain" mentioned in this application indicate open or closed. For example, the terms "include" and "contain" may indicate that other components not listed may further be included or contained, or only listed components may be included or contained.

Unless otherwise specified, the term "or" is inclusive in this application. For example, the phrase "A or B" means "A, B, or both A and B. More specifically, more specifically, the condition "A or B" is satisfied by any one of the following conditions: A is true (or present) and B is false (or absent); A is false (or absent) and B is true (or present); or both A and B are true (or present).

The positive electrode active material may include, but is not limited to, at least one of transition metal oxide, a polyanionic material (for example, phosphates, fluorophosphates, pyrophosphates, or sulfates), and a Prussian blue material. Because different positive electrode active materials have different properties, to improve comprehensive performance of a secondary battery, a plurality of different types of positive electrode active materials are usually mixed for use. However, different types of active materials may be greatly different, for example, have different voltage plateaus. Consequently, during charging and discharging, capacity fade of some of the active materials is accelerated, resulting in impact on capacity utilization and cycle performance of a secondary battery.

To resolve the foregoing problems, an embodiment of this application provides a positive electrode active material. The positive electrode active material includes a particular polyanionic material and a ternary material, so that voltage plateaus of the two are close to each other, thereby facilitating capability utilization and cycle performance of a secondary battery. The technical solutions of the embodiments of this application are described below in detail.

**Positive electrode active material**

According to a first aspect, an embodiment of this application provides a positive electrode active material. The positive electrode active material includes a first active material and a second active material. The first active material includes a compound having a molecular formula of $Li_{1+x}Fe_{1-y}A_yP_{1-z}Q_zO_4$ and a modified compound thereof, where $0 \leq x < 1$, $0 \leq y \leq 0.8$, $0 \leq z \leq 0.1$, A includes one or more of Zn, Al, Na, K, Mg, Mo, W, Ti, V, Cr, Mn, Ni, Co, Ga, Sn, Sb, Nb, and Ge, and Q includes one or more of B, Si, N, S, F, Cl, and Br. The second active material includes a compound having a molecular

formula of $Li_hNi_jCo_kM1_dM2_eO_fR_g$ and a modified compound thereof, where $0.75 \leq h \leq 1.2$, $0.38 < j < 1$, $0.03 < k < 0.50$, $0 < d < 1$, $0 \leq e \leq 0.2$, $1 \leq f \leq 2.5$, $0 \leq g \leq 1$, $f+g \leq 3$, M1 includes one or two of Mn or Al, M2 includes one or more of a group consisting of Zr, Zn, Cu, Cr, Mg, Fe, V, Ti, Sr, Sb, Ba, Y, W, and Nb, and R includes one or more of a group consisting of N, F, S, and Cl.

The first active material is a polyanionic material. The polyanionic material has a special framework structure formed by two-dimensional van der Waals bonding or a 3D framework. The structure facilitates intercalation or de-intercalation of metal ions, for example, lithium ions or sodium ions. In addition, the polyanionic material not only can rapidly conduct the metal ions, but also can stabilize a redox potential of a transition metal during charging and discharging. In addition, due to stability of a P-O bond in the polyanionic material, stability of oxygen in lattices is significantly improved, thereby improving stability of the polyanionic material, which is conducive to increasing stability of the positive electrode active material. When a polyanionic material is used as the positive electrode active material in the secondary battery, the cycle performance of the secondary battery can be improved.

The second active material is a ternary material. Nickel Ni, cobalt Co, the M1 element, and the M2 element have a synergistic effect. For example, the nickel element provides a capacity to the second active material, the cobalt element improves ionic conductivity of the second active material, and the M1 element and the M2 element can improve stability of the second active material. When a ternary material is used as the positive electrode active material in the secondary battery, the capacity, the voltage plateau, and the like of the secondary battery can be significantly improved.

The polyanionic material and the ternary material are mixed for use. The polyanionic material has good thermochemical stability, and the ternary material has a high capacity. After the two materials are mixed for use, the use reliability of the secondary battery can be taken into account while improving the capacity of the secondary battery. However, there is a large difference between voltage plateaus of a conventional polyanionic material and a conventional ternary material. During charging and discharging, there are large differences in voltage and rate. In particular, a rate actually undertaken by the ternary material in a mixed system is higher than a rate of the entire secondary battery. Therefore, if a cycle test is performed on the mixed positive electrode active material for long time, the capacity of the ternary material rapidly fades, affecting the capacity utilization and the cycle performance of the secondary battery.

However, in the embodiments of this application, the polyanionic material is particularly selected. When the first active material and the second active material satisfy the ranges of the foregoing molecular formulas, the voltage plateaus of the first active material and the second active material are close to each other, which is conducive to jointly utilizing capacities of the two and improve the cycle performance of the secondary battery.

In this embodiment of this application, the compound may be modified. Modifying a compound may refer to performing dope modification and/or surface coating modification on the foregoing compound material.

When the positive electrode active material further satisfies one or more of the following conditions, in this embodiment of this application, the capacity utilization and the cycle performance of the secondary battery can be further improved.

In some embodiments, a positive electrode plate including the positive electrode active material per unit area and a lithium plate per unit area are formed into a button-type half-cell, and the button-type half-cell is charged at a rate of 0.1 C, to obtain a capacity-voltage derivative curve dQ/dV-V graph, where the capacity-voltage derivative curve includes a first peak value $\alpha$ and a second peak value $\beta$, where a first peak value $\alpha$, a unit of which is V, where a horizontal coordinate corresponding to the first peak value $\alpha$ is $v_1$; and a second peak value $\beta$, a unit of which is V, where a horizontal coordinate corresponding to the second peak value $\beta$ is $v_2$, where $\alpha - \beta \leq 0.25$, and $v_2 < v_1$.

Optionally, $3.5 < v_1 < 4.0$. For example, $v_1$ may be 3.6, 3.7, 3.8, 3.9, or a range formed by any two of the foregoing values.

Optionally, $3.3 < v_2 < 3.6$ For example, $v_2$ may be 3.35, 3.40, 3.42, 3.45, 3.50, 3.53, 3.55, 3.58, or a range formed by any two of the foregoing values.

In this embodiment of this application, a capacity-voltage curve may be obtained according to the following steps: forming a positive electrode plate including the positive electrode active material per unit area and a lithium plate per unit area into a button-type half-cell, and charging the button-type half-cell at a rate of 0.1 C, to obtain a voltage value and a capacity value corresponding to the voltage value; calculating a value $\Delta$capacity/$\Delta$voltage for each piece of neighboring data as a corresponding value dQ/dV; and using a voltage as a horizontal coordinate and dQ/dV as a vertical coordinate, to obtain a curve dQ/dV-V.

In some embodiments, a positive electrode plate including the first active material per unit area and a lithium plate per unit area are formed into a button-type half-cell, and the button-type half-cell is charged at a rate of 0.1 C, to obtain a first relationship curve between an SOC and an OCV corresponding to the SOC, where a voltage plateau at 0 to 10% SOC in the first relationship curve is denoted as a, and a unit of the voltage plateau is V; and

a positive electrode plate including the second active material per unit area and a lithium plate per unit area are formed into a button-type half-cell, and the button-type half-cell is charged at a rate of 0.1 C, to obtain a second relationship curve between an SOC and an OCV corresponding to the SOC, where a voltage plateau at 0 to 10% SOC in the second relationship curve is denoted as b, and a unit of the voltage plateau is V, where

$$a-b \leq 0.15.$$

The first relationship curve is drawn and formed by using an SOC as a horizontal coordinate and an OCV as a vertical coordinate. The second relationship curve is drawn and formed by using an SOC as a horizontal coordinate and an OCV as a vertical coordinate.

When a and b satisfy the foregoing relationships, it indicates that a difference between voltage plateaus of the first active material and the second active material is small. During a cycle test on the positive electrode active material formed by the two, basically, neither of the active materials is excessively lost, so that the capacity utilization and the cycle performance of the secondary battery can be improved.

In this embodiment of this application, the first active material and the second active material are further selected, so that the capacity utilization and the cycle performance of the secondary battery can be further improved.

In some embodiments, the first active material satisfies: $0 \leq x \leq 0.3$.

In some embodiments, the first active material satisfies: $0 \leq y \leq 0.7$.

In some embodiments, the first active material satisfies: A includes one or more of Ti, V, Ni, Co, and Mg.

In some embodiments, the first active material satisfies: Q includes one or more of B, Si, N, and S.

For example, the first active material includes one or more of $LiMn_{0.5}Fe_{0.5}PO_4$, $LiMn_{0.6}Fe_{0.4}PO_4$, $LiMn_{0.7}Fe_{0.3}PO_4$, and $LiFePO_4$.

To further improve the conductivity of the first active material, in some embodiments, the first active material includes a modified compound. A specific modification manner is coating modification. To be specific, a surface of a particle may be coated with a conductive layer, and a material of the conductive layer may include one or more of carbon, phosphates, and pyrophosphates.

In some embodiments, the second active material satisfies: $0.50 \leq j < 1$.

In some embodiments, the second active material satisfies: $0.50 \leq j \leq 0.95$.

In some embodiments, the second active material satisfies: M2 includes one or more of Mg, Ti, Ba, and Nb.

For example, the second active material includes one or more of $LiNi_{0.50}Co_{0.20}Mn_{0.30}O_2$, $LiNi_{0.70}Co_{0.20}Mn_{0.10}O_2$, $LiNi_{0.50}Co_{0.30}Mn_{0.20}O_2$, $LiNi_{0.60}Co_{0.20}Mn_{0.20}O_2$, $LiNi_{0.80}Co_{0.10}Mn_{0.10}O_2$, and $LiNi_{0.90}Co_{0.05}Mn_{0.05}O_2$.

In this application, types of the first active material and the second active material may be detected through common methods and devices in the art, for example, phase analysis is performed through X-ray diffraction (XRD), and/or chemical elements and proportions thereof are confirmed through an inductive coupled plasma emission spectrometer (ICP).

When the positive electrode active material further satisfies one or more of the following conditions, in this embodiment of this application, the capacity utilization and the cycle performance of the secondary battery can be further improved.

In some embodiments, a mass percentage of the first active material based on a mass of the positive electrode active material is A%; and a mass percentage of the second active material based on the mass of the positive electrode active material is B%, where the positive electrode active material satisfies: $1.5 \leq A/B \leq 9.0$, and optionally, $2.3 \leq A/B \leq 4.0$. For example, A/B may be 1.5, 1.8, 2.0, 2.3, 2.5, 2.8, 3.0, 3.2, 3.5, 3.8, 4.0, 4.5, 5.0, 5.5, 6.0, 6.5, 7.0, 7.5, 8.0, 9.0, or a range formed by any two of the foregoing values.

When a ratio of the mass percentage of the first active material to the mass percentage of the second active material falls within the foregoing range, the first active material and the second active material can fully exert the synergistic effect, thereby improving the capacity utilization and the cycle performance of the secondary battery.

In some embodiments, $60 \leq x \leq 90$, and optionally, $70 \leq A \leq 80$. For example, the mass percentage of the first active material is 60, 65, 70, 75, 80, 85, or 90, or a range formed by any two of the foregoing values.

In some embodiments, $10 \leq x \leq 40$, and optionally, $20 \leq B \leq 30$. For example, the mass percentage of the second active material is 10, 15, 20, 25, 30, 35, 40, or a range formed by any two of the foregoing values.

In this embodiment of this application, a content of the first active material and a content of the second active material may be detected through conventional methods and devices in the art. For example, a physical phase may be confirmed through the XRD method, and a proportion of an element may be determined through an inductively coupled plasma emission spectrometry (ICP) method: 5 to 100 mg of sample is weighted for digestion, and a digestion agent is concentrated nitric acid. The content of the first active material and the content of the second active material (element content/mass percentage of the element in the additive) are calculated based on the measured element content.

In this embodiment of this application, when the morphology of the positive electrode active material is particularly selected, the capacity utilization and the cycle performance of the secondary battery can also be further improved.

In some embodiments, the first active material includes one or two of monocrystalline particles and quasi-monocrystalline particles.

In some embodiments, the second active material is one or more of monocrystalline particles, quasi-monocrystalline particles, and polycrystalline particles, and optionally, the second active material includes polycrystalline particles.

The polycrystalline particles are secondary spherical particles formed through agglomeration of a plurality of primary particles. Therefore, a transmission path of lithium ions is shorter, and rate performance is better. In the mixed system, when a larger rate is undertaken, a capacity is less likely to deteriorate.

In this embodiment of this application, the morphology of the first active material and the morphology the second active material may be confirmed through scanning with a scanning electron microscope (SEM). For example, a scanning electron microscope model JSM-5610LV of the FEI Company of the United States is used to observe the morphology structure after performing vacuum gold spraying on a sample, and/or a transmission electron microscope (TEM) is used to confirm the fine structure.

**Positive electrode plate**

According to a second aspect, an embodiment of this application further provides a positive electrode plate. The positive electrode plate includes a positive electrode current collector and a positive electrode film layer arranged on at least one surface of the positive electrode current collector. The positive electrode current collector has two opposite surfaces in a thickness direction of the positive electrode current collector, and the positive electrode film layer is arranged on either or both of the two opposite surfaces of the positive electrode current collector.

In an embodiment of this application, the positive electrode film layer includes the positive electrode active material according to any embodiment of the first aspect of this application.

In some embodiments, the positive electrode film layer may optionally include a positive electrode conductive agent. A type of the positive electrode conductive agent is not particularly limited in the embodiments of this application. For example, the positive electrode conductive agent includes at least one of superconducting carbon, conductive graphite, acetylene black, carbon black, Ketjen black, carbon dots, carbon nanotubes, graphene, and carbon nanofibers. In some embodiments, a mass percentage of the positive electrode conductive agent based on a total weight of the positive electrode film layer is less than or equal to 5wt%.

In some embodiments, the positive electrode film layer may optionally include a positive electrode binder. A type of the positive electrode binder is not particularly limited in the embodiments of this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In some embodiments, a mass percentage of the positive electrode binder based on a total weight of the positive electrode film layer is less than or equal to 5wt%.

In some embodiments, the positive electrode current collector may be a metal foil or a composite current collector. For example, an aluminum foil may be used as a metal foil. The composite current collector may include a polymer material base layer and a metal material layer formed on at least one surface of the polymer material base layer. For example, the metal material may include at least one of aluminum, an aluminum alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The positive electrode film layer is usually formed by coating a positive electrode slurry on the positive electrode current collector followed by drying and cold pressing. The positive electrode slurry is usually formed by dispersing the positive electrode active material, the optional conductive agent, the optional binder, and any other components in a solvent and performing uniform stirring. The solvent may be, but is not limited to, N-methyl pyrrolidone (NMP).

**Secondary battery**

According to a third aspect, an embodiment of this application further provides a secondary battery.

The secondary battery, or referred to as a rechargeable battery or a storage battery, refers to a battery that can be reused by activating its active material through charging after the battery is discharged. Usually, the secondary battery includes an electrode assembly and an electrolytic solution. The electrode assembly includes a positive electrode plate, a negative electrode plate, and a separator. The separator is arranged between the positive electrode plate and the negative electrode plate, and mainly functions to prevent a short circuit between a positive electrode and a negative electrode while allowing active ions to pass through.

In this application, the type of the secondary battery is not specifically limited. For example, the secondary battery may be a lithium-ion battery, a sodium-ion battery, or the like. Specifically, the secondary battery may be a lithium-ion secondary battery.

In some embodiments, the secondary battery includes the positive electrode plate according to any embodiment of the second aspect of this application, or the secondary battery includes a positive electrode plate, where the positive electrode plate includes the positive electrode active material according to any embodiment of the first aspect of this application. Therefore, the secondary battery in this embodiment of this application can take both high capacity utilization and cycle performance into account.

[Negative electrode plate]

The secondary battery further includes a negative electrode plate.

In some embodiments, the negative electrode plate includes a negative electrode current collector and a negative electrode film layer that is arranged on at least one surface of the negative electrode current collector and that includes a negative electrode active material. For example, the negative electrode current collector has two opposite surfaces in a thickness direction of the negative electrode current collector, and the negative electrode film layer is arranged on either or both of the two opposite surfaces of the negative electrode current collector.

The negative electrode active material may employ a negative electrode active material for a secondary battery known in the art. For example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material.

In some embodiments, the negative electrode film layer may optionally include a negative electrode conductive agent. A type of the negative electrode conductive agent is not particularly limited in the embodiments of this application. For example, the negative electrode conductive agent may include at least one of superconducting carbon, conductive graphite, acetylene black, carbon black, Ketjen black, carbon dots, carbon nanotubes, graphene, and carbon nanofibers. In some embodiments, a mass percentage of the negative electrode conductive agent based on a total weight of the negative electrode film layer is less than or equal to 5wt%.

In some embodiments, the negative electrode film layer may optionally include a negative electrode binder. A type of the negative electrode binder is not particularly limited in the embodiments of this application. For example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and sodium polyacrylate PAAS), polyacrylamide (PAM), polyvinyl alcohol (PVA), sodium alginate (SA), and carboxymethyl chitosan (CMCS). In some embodiments, a mass percentage of the negative electrode binder based on a total weight of the negative electrode film layer is less than or equal to 5wt%.

In some embodiments, the negative electrode film layer may further optionally include other additives. For example, the other additives may include a thickener, for example, sodium carboxymethyl cellulose (CMC) and a PTC thermistor material. In some embodiments, a mass percentage of the other additives based on a total weight of the negative electrode film layer is less than or equal to 2wt%.

In some embodiments, the negative electrode current collector may be a metal foil or a composite current collector. For example, a copper foil may be used as a metal foil. The composite current collector may include a polymer material base layer and a metal material layer formed on at least one surface of the polymer material base layer. For example, the metal material may include at least one of copper, a copper alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The negative electrode film layer is usually formed by coating a negative electrode slurry on the negative electrode current collector followed by drying and cold pressing. The negative electrode slurry is usually formed by dispersing the negative electrode active material, the optional conductive agent, the optional binder, and the other optional additives in a solvent and performing uniform stirring. The solvent may be, but is not limited to, N-methyl pyrrolidone (NMP) or deionized water.

The negative electrode plate does not exclude other additional functional layers in addition to the negative electrode film layer. For example, in some embodiments, the negative electrode plate according to this embodiment of this application may further include a conductive primer layer (which is, for example, formed by a conductive agent and a binder) sandwiched between the negative electrode current collector and the negative electrode film layer and arranged on the surface of the negative electrode current collector. In some other examples, the negative electrode plate according to this embodiment of this application further includes a protective layer covering the surface of the negative electrode film layer.

[Electrolytic solution]

The secondary battery further includes an electrolytic solution.

During charging and discharging of the secondary battery, active ions are intercalated and de-intercalated back and forth between a positive electrode plate and a negative electrode plate. The electrolytic solution conducts the active ions between the positive electrode plate and the negative electrode plate. The type of the electrolytic solution is not particularly limited in the embodiments of this application, and can be selected according to actual requirements.

The electrolytic solution includes an electrolytic salt and a solvent. Types of the electrolytic salt and the solvent are not specifically limited, and can be selected according to actual requirements.

When the secondary battery in this application is a lithium-ion battery, for example, the electrolytic salt may include, but is not limited to, at least one of lithium hexafluorophosphate (LiPF$_6$, lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato) borate (LiBOB), lithium difluorophosphate (LiPO$_2$F$_2$), lithium difluorobis(oxalate) phosphate (LiDFOP), and lithium tetrafluoro(oxalato)phosphate (LiTFOP).

When the secondary battery in this application is a sodium-ion battery, for example, the electrolytic salt may include, but is not limited to, at least one of sodium hexafluorophosphate (NaPF$_6$), sodium tetrafluoroborate (NaBF$_4$), sodium perchlorate (NaClO$_4$), sodium hexafluoroarsenate (NaAsF$_6$), sodium bis(fluorosulfonyl)imide (NaFSI), sodium bis(trifluoromethanesulfonyl)imide (NaTFSI), sodium triflate (NaTFS), sodium difluoro(oxalato)borate (NaDFOB), sodium bis(oxalato)borate (NaBOB), sodium difluorophosphate (NaPO$_2$F$_2$), sodium difluorobis(oxalate) phosphate (NaDFOP), and sodium tetrafluoro(oxalato)phosphate (NaTFOP).

For example, the solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution may optionally include additives. For example, the additives may include negative electrode film forming additives, or may include positive electrode film forming additives, and may further include additives that can improve specific performance of a battery, such as additives that improve battery overcharging performance of a battery, and additives that improve high-temperature performance or low-temperature performance of the battery.

[Separator]

The secondary battery further includes a separator.

In some embodiments, the secondary battery further includes a separator. A type of the separator is not particularly limited in this application, and any well-known porous structure separator with good chemical and mechanical stability can be selected.

In some embodiments, a material of the separator may include at least one of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode plate, the separator, and the negative electrode plate can be made into an electrode assembly through a winding process and/or a lamination process.

In some embodiments, the secondary battery may include an outer package. The outer package may be configured to package the electrode assembly and the electrolytic solution.

In some embodiments, the outer package of the secondary battery may be a hard case, for example, a hard plastic case, an aluminum case, or a steel case. The outer package of the secondary battery may also be a soft package, such as a pouch soft package. The soft package may be made of at least one of plastic, such as polypropylene (PP), polybutylene terephthalate (PBT), and polybutylene succinate (PBS).

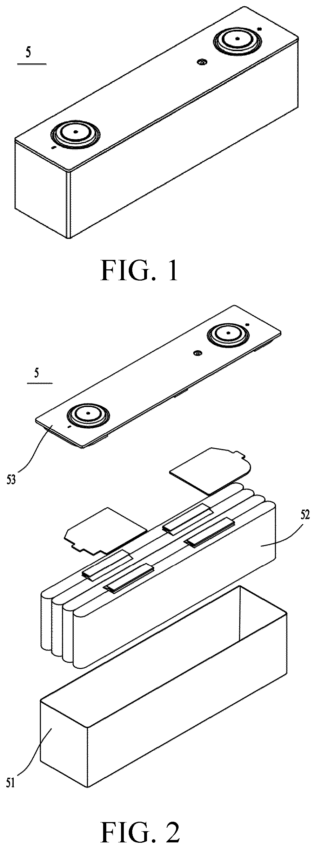

A shape of the secondary battery is not particularly limited in this application, and the secondary battery may be in a cylinder, a square, or any other shape. For example, FIG. 1 shows a secondary battery 5 having a square structure as an example.

In some embodiments, as shown in FIG. 2, an outer package may include a case 51 and a cover plate 53. The case 51 may include a bottom plate and side plates connected to the bottom plate, where the bottom plate and the side plates are enclosed to form an accommodating cavity. The case 51 is provided with an opening in communication with the accommodating cavity, and the cover plate 53 is configured to cover the opening to close the accommodating cavity. The positive electrode plate, the negative electrode plate, and the separator may form an electrode assembly 52 through a winding process and/or a lamination process. The electrode assembly 52 is packaged in the accommodating cavity. The electrolytic solution infiltrates into the electrode assembly 52. A quantity of electrode assemblies 52 included in the secondary battery 5 may be one or more, which may be adjusted based on actual requirements.

A preparation method for a secondary battery according to this application is well-known. In some embodiments, a secondary battery may be formed by assembling a positive electrode plate, a separator, a negative electrode plate, and an electrolytic solution. For example, an electrode assembly may be formed from the positive electrode plate, the separator, and the negative electrode plate through a winding process and/or a lamination process. The electrode assembly is placed in an outer package, and then is baked and then injected with an electrolytic solution. After drying, the electrolytic solution is injected, and a secondary battery is obtained through procedures such as vacuum packaging, standing, formation, and shaping.

In some embodiments of this application, the secondary battery according to this application may be assembled into a battery module, a quantity of secondary batteries included in the battery module may be one or more, and a specific quantity may be adjusted based on application and a capacity of the battery module.

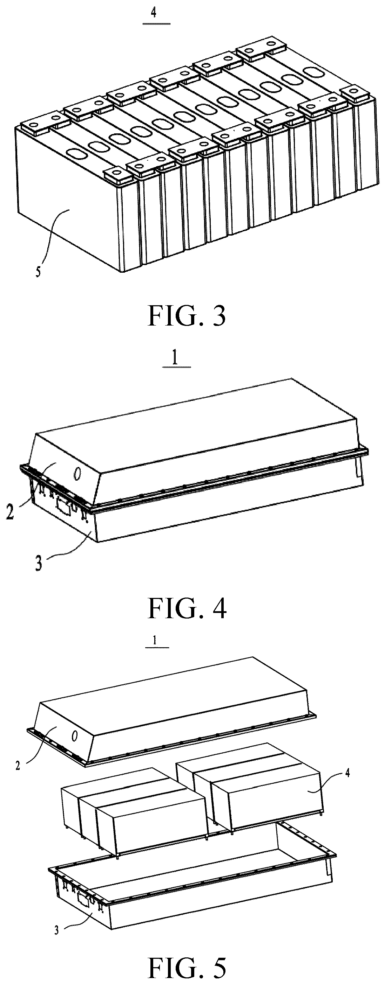

FIG. 3 is a schematic diagram of a battery module 4 as an example. As shown in FIG. 3, in the battery module 4, a plurality of secondary batteries 5 may be sequentially arranged in a length direction of the battery module 4, and certainly, may alternatively be arranged in any other manner. The plurality of secondary batteries 5 may be further secured by fasteners.

Optionally, the battery module 4 may further include a can having an accommodating space, and the plurality of secondary batteries 5 are accommodated in the accommodating space.

In some embodiments, the foregoing battery module may also be assembled into a battery pack, and a quantity of battery modules included in the battery pack may be adjusted based on application and a capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 and form an enclosed space for accommodating the battery module 4. The plurality of battery modules 4 may be arranged within the battery box in any manner.

## Electric device

A third aspect of an embodiment of this application provides an electric device. The electric device includes at least one of the secondary battery, the battery module, or the battery pack of this application. The secondary battery, the battery module, or the battery pack may be used as a power supply of the electric device, and may also be used as an energy storage unit of the electric device. The electric device may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, and an energy storage system.

Whether to use the secondary battery, the battery module, or the battery pack may be determined based on use requirements of the electric device.

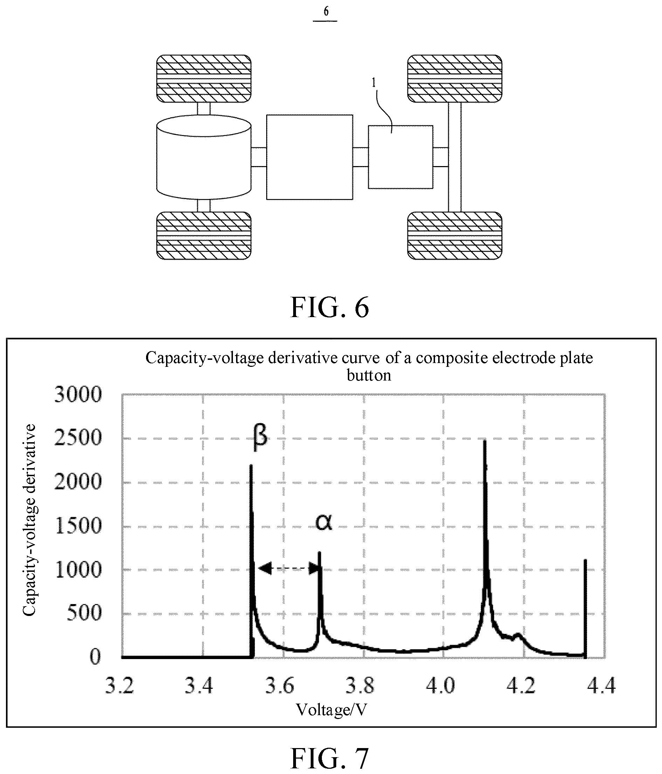

FIG. 6 is a schematic diagram of an electric device as an example. The electric device may be a battery electric vehicle, a hybrid electric vehicle, a plug-in hybrid electric vehicle, or the like. To satisfy requirements of the electric device for high power and high energy density, a battery pack or a battery module may be used.

For another example, the electric device may be a mobile phone, a tablet computer, a notebook computer, or the like. The electric device usually needs to be light and thin, and a secondary battery may be used as a power supply.

## Examples

Content disclosed in this application is described in detail in the following examples. These examples are only for illustrative purposes because various modifications and changes made without departing from the scope of the content disclosed in this application are apparent to a person skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

## Examples

1. Preparation of a positive electrode plate

An aluminum foil with a thickness of 12 $\mu$m was used as a positive electrode current collector.

A positive electrode active material, acetylene black as a conductive agent, and polyvinylidene fluoride (PVDF) as a binder were fully stirred and mixed in a proper amount of solvent NMP at a weight ratio of 97.5:1.4:1.1, to form a uniform positive electrode slurry. The positive electrode slurry was uniformly coated on surfaces of the aluminum foil as the positive electrode current collector, followed by drying and cold pressing, to obtain a positive electrode plate.

2. Preparation of a negative electrode plate

A copper foil with a thickness of 8 μm was used as a negative electrode current collector.

Graphite as a negative electrode active material, styrene-butadiene rubber (SBR) as a binder, sodium carboxymethyl cellulose (CMC-Na) as a thickener, and carbon black (Super P) as a conductive agent were dissolved in fully stirred and mixed a proper amount of deionized water as a solvent at a weight ratio of 96.2:1.8:1.2:0.8, to form a uniform negative electrode slurry. The negative electrode slurry was uniformly coated on surfaces of the copper foil as the negative electrode current collector, followed by drying and cold pressing, to obtain a negative electrode plate.

3. Separator

A porous polyethylene (PE) film was used as a separator.

4. Preparation of an electrolytic solution

In an environment in which a water content was less than 10 ppm, non-aqueous DMC organic solvents, namely, ethylene carbonate (EC), and diethyl carbonate () were mixed at a volume ratio of 1:1 to obtain an electrolytic solvent, and then a lithium salt was mixed with the mixed solvent, to prepare an electrolytic solution with a lithium salt concentration of 1 mol/L.

5. Preparation of a secondary battery

The positive electrode plate, the separator, and the negative electrode plate were laminated in sequence, to cause the separator to isolate the positive electrode plate and the negative electrode plate from each other, and then, an electrode assembly was obtained through winding. The electrode assembly was placed in an outer package case, and an electrolytic solution was injected after drying, followed by procedures such as vacuum packing, standing, formation, and shaping, to obtain a lithium-ion battery.

Examples 2 to 17 and comparative examples

In Examples 2 to 17 and comparative examples, lithium-ion batteries were prepared using methods similar to that of Example 1. Different from Example 1, in Examples 2 to 17 and the comparative examples, at least one of a type and a content of the first active material and a type and a content of the second active material was adjusted.

**Data of the examples and the comparative examples is shown in Table 1 to Table 3.**

**Test method**

1. Cycle performance test on a secondary battery

At 25°C, the foregoing prepared secondary batteries were charged at a constant current of 0.33 C to a charge cut-off voltage of 4.3 V, charged at a constant voltage until the current was 0.05 C and stood for 5 min, and then, discharged at a constant current of 0.33 C to a discharge cut-off voltage of 2.5 V. Initial capacities of the secondary batteries were recorded as C0. Then, the secondary batteries were charged at 0.33 C and discharged at 1 C. A discharge capacity Cn of each cycle was recorded until a cycle capacity retention rate (that is, Cn/C0×100%) was 80%, and a quantity of cycles was recorded. A larger quantity of cycles indicated better cycle performance of a secondary battery.

**Test results**

The test results are shown in Table 1 to Table 3.

Table 1

| Group | First active material | | Second active material | | Cycle life deterioration/improvement | Composite electrode plate α-β | Active material m-n |
|---|---|---|---|---|---|---|---|
| | Type | Ratio/wt% | Type | Ratio/wt% | | | |
| Comparative example 1 | 1-1 | 100% | / | / | Comparison reference 1 | / | / |
| Example 1 | 1-1 | 80% | 2-3 | 20% | 72% | 0.202 | 0.055 |
| Example 2 | 1-1 | 80% | 2-4 | 20% | 132% | 0.205 | 0.086 |
| Example 3 | 1-1 | 90% | 2-4 | 10% | 95% | 0.186 | 0.086 |
| Example 4 | 1-1 | 70% | 2-4 | 30% | 149% | 0.199 | |
| Example 5 | 1-1 | 80% | 2-5 | 20% | 109% | 0.243 | 0.077 |
| Example 6 | 1-1 | 70% | 2-5 | 30% | 165% | 0.160 | |
| Example 7 | 1-1 | 60% | 2-5 | 40% | 60% | 0.171 | |
| Example 8 | 1-1 | 80% | 2-6 | 20% | 82% | 0.160 | 0.065 |
| Example 9 | 1-1 | 70% | 2-6 | 30% | 98% | 0.176 | |
| Example 10 | 1-1 | 70% | 2-4 | 15% | 74% | 0.170 | 0.086 |
| | | | 2-6 | 15% | | | 0.065 |

Table 2

| Group | First active material | | Second active material | | Cycle life deterioration/improvement | Composite electrode plate α-β | Active material m-n |
|---|---|---|---|---|---|---|---|
| | Type | Ratio/wt% | Type | Ratio/wt% | | | |
| Comparative example 2 | 1-2 | 100% | / | / | Comparison reference 2 | / | / |
| Example 11 | 1-2 | 80% | 2-4 | 20% | 32% | 0.189 | 0.141 |
| Example 12 | 1-2 | 80% | 2-5 | 20% | 49% | 0.225 | 0.132 |
| Example 13 | 1-2 | 80% | 2-6 | 20% | 35% | 0.231 | 0.12 |

Table 3

| Group | First active material | | | Second active material | | | Cycle life deterioration/improvement | Composite electrode plate $\alpha$-$\beta$ | Active material m-n |
|---|---|---|---|---|---|---|---|---|---|
| | Type | Ratio/wt% | Morphology | Type | Ratio/wt% | Morphology | | | |
| Comparative example 1 | 1-1 | 100% | Monocrystal | / | / | / | Comparison reference 1 | / | / |
| Example 14 | 1-1 | 80% | Monocrystal | 2-7 | 20% | Monocrystal | 113% | 0.201 | 0.079 |
| Example 15 | 1-1 | 80% | Polycrystal | 2-7 | 20% | Monocrystal | 56% | 0.195 | 0.028 |
| Example 16 | 1-1 | 80% | Monocrystal | 2-7 | 20% | Polycrystal | 123% | 0.186 | 0.067 |
| Example 17 | 1-1 | 80% | Polycrystal | 2-7 | 20% | Polycrystal | 86% | 0.164 | 0.019 |

In Table 1 to Table 3, material types are specifically as follows:
A chemical formula of the first active material 1-1 is $LiMn_{0.6}Fe_{0.4}PO_4$.

A chemical formula of the first active material 1-2 is $LiFePO_4$.

A chemical formula of the second active material 2-3 is $LiNi_{0.50}Co_{0.30}Mn_{0.20}O_2$.

A chemical formula of the second active material 2-4 is $LiNi_{0.60}Co_{0.20}Mn_{0.20}O_2$.

A chemical formula of the second active material 2-5 is $LiNi_{0.80}Co_{0.10}Mn_{0.10}O_2$.

A chemical formula of the second active material 2-6 is $LiNi_{0.90}Co_{0.05}Mn_{0.05}O_2$.

A chemical formula of the second active material 2-7 is $LiNi_{0.90}Co_{0.08}Mn_{0.02}O_2$.

In Table 1 to Table 3, a calculation formula of the "cycle life deterioration/improvement" is M/N-1, where M is a quantity of cycles when cycling in an example fades to 80% of an initial capacity, and N is a quantity of cycles when cycling in a Comparative example 1 (or Comparative example 2) fades to 80% of an initial capacity.

It can be known from Table 1 to Table 3 that, in Comparative example 1 and Comparative example 2, a polyanionic material is used as a positive electrode active material, and cycle performance thereof is poor. Compared with the comparative examples, with reference to FIG. 7, a polyanionic material of a particular molecular formula and a ternary material of a particular molecular formula are mixed for use as the positive electrode active material in the examples of this application. Voltage plateaus of the first active material and the second active material are close to each other, which is conductive to jointly utilizing capacities of the first active material and the second active material, and improves the cycle performance of the secondary battery.

Although illustrative embodiments have been demonstrated and described, it should be understood by a person skilled in the art that the foregoing embodiments should not be construed as limitations on this application, and that changes, substitutions and modifications may be made to the embodiments without departing from the spirit, principles, and scope of this application.

**Claims**

1. A positive electrode active material, comprising:

   a first active material, comprising a compound having a molecular formula of $Li_{1+x}Fe_{1-y}A_yP_{1-z}Q_zO_4$ and a modified compound thereof, wherein $0 \leq x < 1$, $0 \leq y \leq 0.8$, $0 \leq z \leq 0.1$, A comprises one or more of Zn, Al, Na, K, Mg, Mo, W, Ti, V, Cr, Mn, Ni, Co, Ga, Sn, Sb, Nb, and Ge, and Q comprises one or more of B, Si, N, S, F, Cl, and Br; and
   a second active material, comprising a compound having a molecular formula of $Li_hNi_jCo_kM1_dM2_eO_fR_g$ and a modified compound thereof, wherein $0.75 \leq h \leq 1.2$, $0.38 < j < 1$, $0.03 < k < 0.50$, $0 < d < 1$, $0 \leq e \leq 0.2$, $1 \leq f \leq 2.5$, $0 \leq g \leq 1$, $f+g \leq 3$, M1 comprises one or two of Mn or Al, M2 comprises one or more of a group consisting of Zr, Zn, Cu, Cr, Mg, Fe, V, Ti, Sr, Sb, Ba, Y, W, and Nb, and R comprises one or more of a group consisting of N, F, S, and Cl.

2. The positive electrode active material according to claim 1, wherein a positive electrode plate comprising the positive electrode active material per unit area and a lithium plate per unit area are formed into a button-type half-cell, and the button-type half-cell is charged at a rate of 0.1 C, to obtain a capacity-voltage derivative curve, wherein the capacity-voltage derivative curve comprises:

   a first peak value $\alpha$, a unit of which is V, wherein a horizontal coordinate corresponding to the first peak value $\alpha$ is $v_1$; and
   a second peak value $\beta$, a unit of which is V, wherein a horizontal coordinate corresponding to the second peak value $\beta$ is $v_2$, wherein

$$\alpha - \beta \leq 0.25, \text{ and } v_2 < v_1;$$

   and
   optionally, $3.5 < v_1 < 4.0$; and/or $3.3 < v_2 < 3.6$.

3. The positive electrode active material according to claim 1 or 2, wherein

   a positive electrode plate comprising the first active material per unit area and a lithium plate per unit area are formed into a button-type half-cell, and the button-type half-cell is charged at a rate of 0.1 C, to obtain a first relationship curve between a state of charge (SOC) and an open circuit voltage (OCV) corresponding to the SOC, wherein a voltage plateau at 0 to 10% SOC in the first relationship curve is denoted as m, and a unit of the voltage plateau is V; and

a positive electrode plate comprising the second active material per unit area and a lithium plate per unit area are formed into a button-type half-cell, and the button-type half-cell is charged at a rate of 0.1 C, to obtain a second relationship curve between an SOC and an OCV corresponding to the SOC, wherein a voltage plateau at 0 to 10% SOC in the second relationship curve is denoted as n, and a unit of the voltage plateau is V, wherein

$$m-n \leq 0.15.$$

4. The positive electrode active material according to any one of claims 1 to 3, wherein the first active material satisfies at least one of the following conditions:

$$0 \leq x \leq 0.3;$$

and

$$0 \leq y \leq 0.7.$$

5. The positive electrode active material according to any one of claims 1 to 4, wherein the first active material satisfies at least one of the following conditions:

(I) A comprises one or more of Ti, V, Ni, Co, and Mg; and
(II) Q comprises one or more of B, Si, N, and S.

6. The positive electrode active material according to any one of claims 1 to 5, wherein the first active material comprises one or more of $LiMn_{0.5}Fe_{0.5}PO_4$, $LiMn_{0.6}Fe_{0.4}PO_4$, $LiMn_{0.7}Fe_{0.3}PO_4$, and $LiFePO_4$.

7. The positive electrode active material according to any one of claims 1 to 6, wherein the second active material satisfies at least one of the following conditions:

(a) $0.50 \leq j < 1$, and optionally, $0.50 \leq j \leq 0.95$; and
(b) M2 comprises one or more of Mg, Ti, Ba, and Nb.

8. The positive electrode active material according to any one of claims 1 to 7, wherein the second active material comprises one or more of $LiNi_{0.50}Co_{0.20}Mn_{0.30}O_2$, $LiNi_{0.70}Co_{0.20}Mn_{0.10}O_2$, $LiNi_{0.50}Co_{0.30}Mn_{0.20}O_2$, $LiNi_{0.60}Co_{0.20}Mn_{0.20}O_2$, $LiNi_{0.80}Co_{0.10}Mn_{0.10}O_2$, and $LiNi_{0.90}Co_{0.05}Mn_{0.05}O_2$.

9. The positive electrode active material according to any one of claims 1 to 8, wherein

a mass percentage of the first active material based on a mass of the positive electrode active material is A%; and
a mass percentage of the second active material based on the mass of the positive electrode active material is B%, wherein
the positive electrode active material satisfies: $1.5 \leq A/B \leq 9.0$, and optionally, $2.3 \leq A/B \leq 4.0$; and
further optionally,
$60 \leq A \leq 90$, and still further optionally, $70 \leq A \leq 80$; and/or
$10 \leq B \leq 40$, and still further optionally, $20 \leq B \leq 30$.

10. The positive electrode active material according to any one of claims 1 to 9, wherein

the first active material comprises one or two of monocrystalline particles and quasi-monocrystalline particles; and/or
the second active material comprises one or more of monocrystalline particles, quasi-monocrystalline particles, and polycrystalline particles, and optionally, the second active material comprises polycrystalline particles.

11. A positive electrode plate, comprising a positive electrode current collector and a positive electrode film layer arranged on at least one surface of the positive electrode current collector, wherein the positive electrode film layer comprises the positive electrode active material according to any one of claims 1 to 10.

**12.** A secondary battery, comprising the positive electrode plate according to claim 11.

**13.** An electric device, comprising the secondary battery according to claim 12.

FIG. 1

FIG. 2

FIG. 3

FIG. 4

FIG. 5

FIG. 6

FIG. 7

# INTERNATIONAL SEARCH REPORT

| International application No. |
| --- |
| **PCT/CN2024/072716** |

### A. CLASSIFICATION OF SUBJECT MATTER

H01M 4/36(2006.01)i; H01M10/0525(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 正极, 第二材料, 第二活性, 第二正极活性, 两种, 多种, 电压, 容量, cathode, positive, second, two, various, voltage, capacity

### C. DOCUMENTS CONSIDERED TO BE RELEVANT

| Category* | Citation of document, with indication, where appropriate, of the relevant passages | Relevant to claim No. |
| --- | --- | --- |
| X | US 2014045069 A1 (NUMATA TATSUJI et al.) 13 February 2014 (2014-02-13) description, paragraphs 17-83 | 1-13 |
| X | US 2023016240 A1 (CONTEMPORARY AMPEREX TECHNOLOGY CO., LTD.) 19 January 2023 (2023-01-19) description, paragraphs 5-157 | 1-13 |
| X | CN 111446488 A (NINGDE CONTEMPORARY AMPEREX TECHNOLOGY CO., LTD.) 24 July 2020 (2020-07-24) description, paragraphs 5-118 | 1-13 |
| X | CN 114730910 A (NINGDE CONTEMPORARY AMPEREX TECHNOLOGY CO., LTD.) 08 July 2022 (2022-07-08) description, paragraphs 5-187 | 1-13 |
| A | CN 111755673 A (SUMITOMO OSAKA CEMENT CO., LTD.) 09 October 2020 (2020-10-09) entire document | 1-13 |

☐ Further documents are listed in the continuation of Box C.     ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 April 2024** | **15 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/072716**

| Patent document cited in search report | | | Publication date (day/month/year) | Patent family member(s) | | | Publication date (day/month/year) |
|---|---|---|---|---|---|---|---|
| US | 2014045069 | A1 | 13 February 2014 | WO | 2012147929 | A1 | 01 November 2012 |
| | | | | JPWO | 2012147929 | A1 | 28 July 2014 |
| | | | | JP | 6052168 | B2 | 27 December 2016 |
| US | 2023016240 | A1 | 19 January 2023 | EP | 4075538 | A1 | 19 October 2022 |
| | | | | EP | 4075538 | A4 | 25 January 2023 |
| | | | | WO | 2022041259 | A1 | 03 March 2022 |
| | | | | CN | 114982002 | A | 30 August 2022 |
| CN | 111446488 | A | 24 July 2020 | None | | | |
| CN | 114730910 | A | 08 July 2022 | CN | 114730910 | B | 29 August 2023 |
| CN | 111755673 | A | 09 October 2020 | CA | 3056824 | A1 | 28 September 2020 |
| | | | | CA | 3056824 | C | 26 April 2022 |
| | | | | US | 2020313172 | A1 | 01 October 2020 |
| | | | | US | 11158852 | B2 | 26 October 2021 |
| | | | | EP | 3716368 | A1 | 30 September 2020 |
| | | | | EP | 3716368 | B1 | 03 November 2021 |
| | | | | JP | 2020161456 | A | 01 October 2020 |
| | | | | JP | 6999598 | B2 | 18 January 2022 |
| | | | | KR | 20200114970 | A | 07 October 2020 |

Form PCT/ISA/210 (patent family annex) (July 2022)

**EP 4 611 064 A1**

**Patent documents cited in the description**

- CN 202310279207